# EUROPEAN PATENT APPLICATION

(11) **EP 4 610 854 A1**
(43) Date of publication of application: **03.09.2025**
(21) Application number: 23771754.1
(22) Date of filing: 02.02.2023
(51) Int. Cl.: G06F 21/36, G06F 18/20

(54) **AUTHENTICATION METHOD**

(30) Priority: 26.10.2022 RU 2022127829
(71) Applicant: Limited Liability Company "Captcha Solutions", Moscow, 121596 (RU)
(72) Inventor: ANISIMOV, Andrey Aleksandrovich, Moscow, 121596 (RU)
(74) Representative: Deambrogi, Edgardo
(86) International application number: PCT/RU2023/000024
(87) International publication number: WO 2024/091140

(57) **Abstract**

The invention relates to the field of computer technology, namely, to the methods of user authentication with graphic images and it can be used, for example, as a CAPTCHA to tell computers and humans apart or for unlocking personal devices, equipment, doors, etc.

A method of authentication includes the following steps: (i) graphic image patterns are generated, (ii) one of the said patterns is demonstrated to the user and the user is asked to depict the demonstrated pattern, (iii) a set of key parameters of the user-generated image is recorded, (iv) a set of key parameters of the user-generated image is compared to the relevant set of key parameters of the pattern, and a successful authentication signal is generated if their difference is within the confidence range. The said set of key parameters includes at least one time parameter characterizing the dynamics of the path along which the user has generated the image. At the step (i), the said set of key parameters and confidence range limits for each pattern are determined by machine learning based on test images generated manually by previously authenticated users when they were shown such pattern.

The invention enables a significant improvement in the reliability of authentication. 12 dependent claims, 5 figures

## Description

### TECHNICAL FIELD

The invention relates to the field of computer technology, namely, the methods of user authentication with graphic images, and it can be used, for example, as a Completely Automated Public Turing test to tell Computers and Humans Apart (CAPTCHA) or for unlocking personal devices, equipment, doors, etc.

### PRIOR ART

Since the widespread proliferation of websites, their owners have been faced with various types of fraud and spam resulting from the use of computer bots (robots) by cybercriminals. In 2000-2001, to address this challenge, the websites began to protect their sign-up pages with CAPTCHAs, where the users were asked to retype garbled text that would be hard to recognize by the software (see Stringham, Edward P. (2015). Private Governance: Creating Order in Economic and Social Life. Oxford University Press. p. 105. ISBN 978-0-19-936516-6. OCLC 5881934034). According to Datanyze, the CAPTCHA-type technology to tell users and robots apart is installed on more than 3,500,000 Internet domains. The users solve CAPTCHAs more than 50 billion times a month. Although this mechanism ensures good security and limits automatic sign-ups to web services, some CAPTCHAs have a number of flaws that allow bots to be validated as humans. This led to studying the possibility of using the currently widespread biometric technologies for addressing this problem and developing specialized software.

An embodiment of CAPTCHA method known from the prior art is based on showing simple text characters with noise to the user and applying known proximity metric algorithms to assess whether the user can replicate these characters (see US8978144B2, G06F21/30, published on March 10, 2015). In a known method, the dynamic effects (showing characters alternately, removing particles randomly, etc.) are added to the demonstration in order to additionally protect against the replication by bots. The main disadvantages of the known method include the complexity of implementation and insufficient reliability of the test, as the demonstrated images can be broken with a relative ease.

According to a method of CAPTCHA known from the prior art, a user is shown a graphic image pattern and is prompted to designate such image with one or more concepts, wherein the authentication is performed using the registered time spent by the user to solve the test (see US8752141B2, G06F7/04, published on June 10, 2014). The main disadvantages of the known method are the inconvenience of its use and insufficient reliability caused by the relative ease of breaking it by means of modern image recognition algorithms.

A user authentication method is known from the prior art, wherein the Cartesian coordinates of the points on the line drawn by the user in the process of drawing an image and the time of drawing are recorded, after which a set of key parameters of the generated image is compared to the relevant set of key parameters of the reference image created previously by an authenticated user (see US11238149B2, G06F21/31, published on February 01, 2022). The known method can be used in a system for unlocking portable computing devices. The main disadvantage of the known method is insufficient reliability of telling apart computers and people.

According to an authentication method known from the prior art, a graphic image pattern is generated by combining several predefined elements and shown to the user, and a set of coordinates of the user-generated image is recorded, a sufficient number of points is selected for comparison, and they are compared to the relevant set of pattern coordinates, and a successful authentication signal is generated if their difference is within the confidence range (see US9471767 B2, G06F21/36 published on October 18, 2016). The disadvantage of the known method is that it assesses only how far the points of the drawn and demonstrated path are distanced from each other, and the only factor considered in terms of drawing dynamics is whether the time spent by bots to generate the image is longer than the time spent by humans to draw the image. Therefore, the main disadvantage of the known method is its limited capability due to the small amount of recorded data, which greatly simplifies the breaking of an authentication system based on such method.

A method of authentication, which is the closest to the proposed invention in terms of its technical essence, includes the following steps: graphic image patterns are generated, one of the said patterns is shown to the user, the user is asked to depict the demonstrated pattern, a set of key parameters of the user generated image is recorded, a set of key parameters of the user generated image is compared to the relevant set of key parameters of the pattern, and a successful authentication signal is generated if their difference is within the confidence range (see US10657243B2, G06F 21/36, published on May 19, 2020). A randomly generated benchmark path is used as an image pattern, and the comparison determines how the characteristic (reference) points are distanced from each other on the path. The disadvantage of the known method is a relatively high probability of breaking, since a successful authentication is determined only by the selection of the object to draw and total time spent to draw it.

### SUMMARY OF THE INVENTION

The technical problem is to eliminate the above disadvantages.

The technical result consists in improved reliability of authentication. The objective is achieved, and the technical result is obtained by the fact that the method of authentication includes the following steps: (i) graphic image patterns are generated, (ii) one of the said patterns is shown to the user and the user is asked to depict the demonstrated pattern, (iii) a set of key parameters of the user-generated image is recorded, (iv) such set of key parameters of the user-generated image is compared to the corresponding set of key parameters of the pattern and a signal of successful authentication is generated, if their difference is within the confidence range, wherein the said set of key parameters includes at least one time parameter that characterizes the dynamics of the path in which the user generated the image, and at the stage (i) the said set of key parameters and the limits of the confidence range are determined by the method of machine learning based on the test images, which were generated manually by previously authenticated users when they were shown this image. The said time parameter may represent the average speed on the path, the acceleration projected on the initial part of the path, the average number of points on the path during the selected time intervals, the time intervals during which the selected parts of the image were generated by the user, the mean and/or mean root square deviation of the length of time intervals between the selected points of the path. The said set of key parameters may further comprise an area under the path projected on a selected coordinate axis and the path length. The said confidence range limits may include an upper threshold value and a lower threshold value, and the successful authentication signal in step (iv) may be generated if the said difference of the key parameters of the user-generated image and the pattern is between the said upper threshold value and the said lower threshold value. At the step (ii), the pattern is preferably demonstrated with noise and/or as an animation. The successful authentication signal is preferably used as a CAPTCHA pass signal or as an unlock signal.

### DESCRIPTION OF DRAWINGS

Fig. 1 presents a screenshot prior to the start of step (ii) of graphic image pattern demonstration;
Fig. 2 presents a screenshot of step (ii) of graphic image pattern demonstration on a mobile phone screen;
Fig. 3 presents a screenshot of step (ii) of graphic image pattern demonstration on a tablet or personal computer screen;
Fig. 4 presents a flowchart of the algorithm for graphic image pattern demonstration with noise, demonstration to the user, and data processing;
Fig. 5 presents a flowchart of the authentication algorithm according to the proposed method.

### DETAILED DESCRIPTION OF THE INVENTION

As an alternative to the existing CAPTCHA variants, the proposed method prompts a user to replicate a graphic image pattern in the form of a drawn shape, and the information collected when drawing the image will be used for authentication. The proposed invention is based on the fact that the replication of behavioral characteristics and, in particular, the manner of drawing (biometric handwriting), is the most challenging from the point of view of imitating (spoofing) for the purposes of breaking a system to gain unauthorized access. The key advantage of biometrics is its uniqueness and multi-parameterized nature. Therefore, the parameters associated with human activity are virtually impossible to replicate or spoof. During the authentication, the proposed technical solution prompts to use not only vectorized characteristics of the generated image, but also vectorized characteristics of the very process of drawing the image, wherein such characteristics are obtained through the use of convolutional deep neural networks (such networks can be pre-trained on a massive amount of any images and further trained on an updated database).

The proposed method of authentication includes the following main steps.

Step (i) to generate graphic image patterns.

The initial graphic image patterns may be uploaded to the authentication system from an external source or suggested by previously authenticated users, and preferably represent simple monochrome objects (pictures). For each pattern, a set of key parameters is generated by the method of machine learning based on the test images and is attached to the said pattern. The images used as test images are those that were manually generated by previously authenticated users when this pattern was demonstrated. Both open platforms and users of the Yandex.Toloka platform can be used to collect deterministic data.

The database can be updated with both ready-made images and those suggested by new users, as well as by automatically generating a pattern with subsequent retraining of the neural network after showing such pattern to real users and collecting information about the set of its key parameters.

To ensure maximum reliability of the proposed method of authentication, the set of key parameters includes at least one time parameter characterizing the dynamics of the path along which the user generated the image (i.e., characterizing the manner of drawing).

The said time parameter may represent the following:
- average speed along the path;
- instantaneous speed along X, Y axes at each point of the path;
- acceleration projected on the initial part of the path (for example, on the first 10 points);
- average number of points on the path for selected time intervals;
- time intervals during which the selected parts of the image (e.g., separate quarters of the picture) were generated by the user;
- mean and/or mean root square deviation of the time interval lengths between selected (characteristic) points of the path;
- ratio of speeds/accelerations/time of generating a subsequent segment to those of a preceding one;
- ratio of the speed/acceleration/time segment to the their total values, etc.

Additionally, a set of key parameters may include non-dynamic parameters such as:
- area under the path projected on the X, Y coordinate axes;
- total length of the path;
- shortest distance between characteristic points of the path and its ratio to the entire length of the path;
- angles of inclination to the X and Y axes of the line between the start and end of the first quarter of the path, etc.

Deep learning algorithms of neural networks used at this step can determine the main characteristic features inherent to the manner of drawing the suggested image by a human, which at the current level of technology development virtually cannot be spoofed by software.

Characteristics of objects are stored in vectorized form (at the input, there are complex structured "raw" data of objects, and at the output, there are vector representations of characteristics in the form of a set of key parameters). The vector data is obtained by running the input data through a pre-trained deep neural network (DNN) and by using deep learning. The DNN is initially trained by humans through manual partitioning of preassembled objects into similar classes, after which the DNN is saved to directly vectorize the input data.

In a similar way, the confidence range limits are determined by using machine learning. The said confidence range limits may include both upper threshold value (when the generated image parameters are too far from those of the pattern, for example, with a difference of more than 30%) and lower threshold value (when the generated image parameters, on the contrary, are too similar to those of the pattern and were probably copied by means of computer hacking, for example, with a difference of less than 3 %).

In addition, it is possible to analyze data about the user's device, user's Internet identifiers (IP address, etc.) to match them against a potential use by the robot (use of additional public and commercial databases).

Step (ii) to show one of the said patterns to the user.

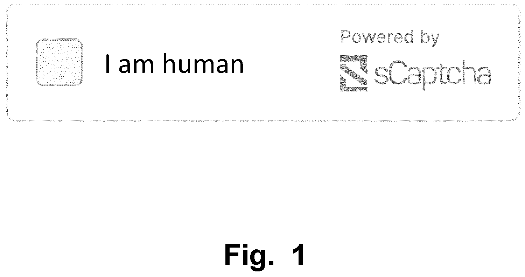

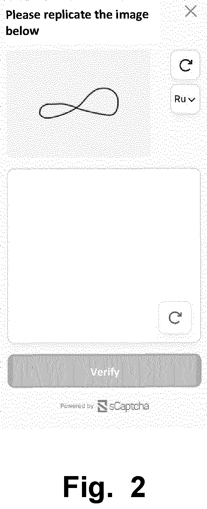

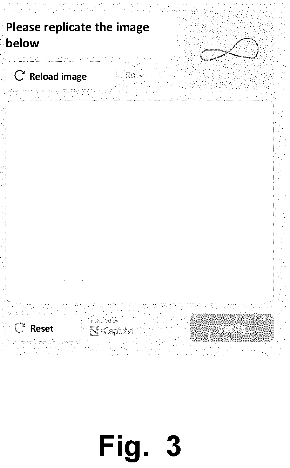

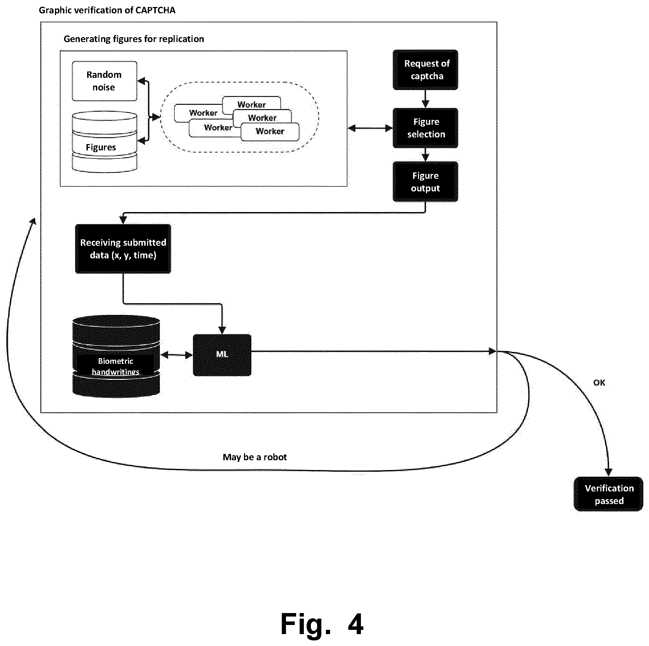

This step involves selecting one of available patterns and showing it to a user on the screen of the device (see Fig.1,2,3). To reduce the probability of breaking, the pattern is shown with noise, i.e. it is overlayed with random noise (see Fig. 4), and to simplify the subsequent analysis, it is demonstrated as an animation showing the path to be followed for drawing the proposed pattern. At the end of this step, the user is asked to replicate the demonstrated pattern using the touch screen of a mobile device, laptop (touchpad) or computer mouse.

Step (iii) to record a set of key parameters of the user-generated image.

When an image is generated by the user, the system dynamically records the emergence of the path (coordinates of points on the touch screen and astronomical or relative time of their appearance) followed by the user to draw the image, and sends the obtained data to a remote server for further processing and identifying the values of key parameters.

Step (iv) to compare and complete the authentication.

At this step, the set of key parameters of user-generated image is compared to the relevant set of key parameters of the pattern. A preferred option is to use cosine distance as a proximity metric between sets of key parameters (vectors).

A successful authentication is signaled if the difference between these parameters is within confidence range limits (i.e., between the upper and lower threshold values). Otherwise, the procedure is repeated or an error notification is issued according to the algorithm shown on Fig. 4.

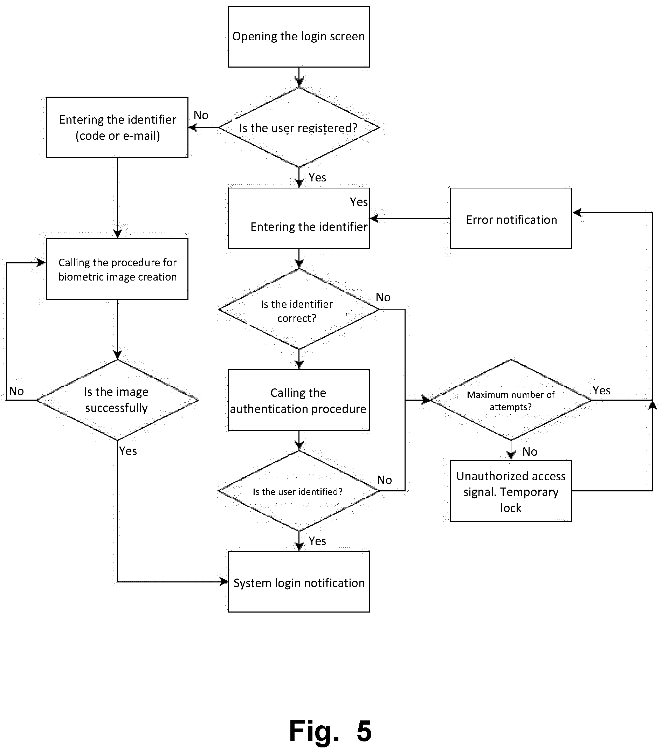

A successful authentication signal can be used as a CAPTCHA pass signal (e.g., to provide access to a website) or as a signal to unlock personal devices, equipment, doors, etc. (see Fig.5).

The use of biometric handwriting characteristics as a basis for recognition enables the proposed method to significantly improve the reliability of authentication both when using it as a CAPTCHA and as an unlock key.

The proposed method has been tested using a deep machine learning algorithm in a neural network with more than 300 layers and 1 million parameters. Overall, more than 21,000 biometric samples were collected during the testing. On average, each user replicated 30 figures from a set of over 700 figures and generated biometric handwriting samples for each image with coordinate and time characteristics to train deep neural networks. The datasets were collected using JavaScript in the form of drawing images, as well as a list of X, Y coordinates and time every few milliseconds.

The following parameters of the identification system were obtained as a result of testing the method:
- authentication time was on average about 6 seconds;
- more than 90% of users were able to understand and pass authentication on the first try;
accuracy of telling bots and users apart was more than 90%.

## Claims

1. A method of authentication, which involves the following steps:
(i) generating graphic image patterns,
(ii) showing one of the said patterns to the user and prompting user to draw the shown pattern,
(iii) recording a set of key parameters of the user-generated image,
(iv) comparing a set of key parameters of the user-generated image to the relevant set of key parameters of the pattern and generating a successful authentication signal, if their difference is within the confidence range,
**characterized in that**
the said set of key parameters includes at least one time parameter characterizing the dynamics of the path along which the user has generated the image, and
at the step (i), the said set of key parameters and confidence range limits for each pattern are determined by machine learning based on test images generated manually by previously authenticated users when they were shown such pattern.

2. The method according to claim 1 **characterized in that** the said time parameter is the average speed along the path.

3. The method according to claim 1 **characterized in that** the said time parameter is the acceleration projected on the initial part of the path.

4. The method according to claim 1 **characterized in that** the said time parameter is the average number of points on the path for selected time intervals.

5. The method according to claim 1 **characterized in that** the said time parameter represents the time intervals during which the selected parts of the image were generated by the user.

6. The method according to claim 1 **characterized in that** the said time parameter is a mean and/or mean root square deviation of the length of the time intervals between the selected points of the path.

7. The method according to claim 1 **characterized in that** the said set of key parameters includes an area under the path projected on a selected coordinate axis.

8. The method according to claim 1 **characterized in that** the said set of key parameters includes a path length.

9. The method according to claim 1 **characterized in that** the said confidence range limits include upper threshold value and lower threshold value, and at step (iv), a successful authentication signal is generated, if the said difference of key parameters of the user-generated image and pattern is within the said upper threshold value and lower threshold value.

10. The method according to claim 1 **characterized in that**, at step (ii), the pattern is shown with noise.

11. The method according to claim 1 **characterized in that**, at step (ii), the pattern is shown as an animation.

12. The method according to claim 1 **characterized in that** a successful authentication signal is used as a CAPTCHA pass signal.

13. The method according to claim 1 **characterized in that** a successful authentication signal is used as an unlock signal.
